# EUROPÄISCHE PATENTSCHRIFT

(11) **EP 1 222 492 B1**
(45) Veröffentlichungstag und Bekanntmachung des Hinweises auf die Patenterteilung: **21.07.2004**
(21) Anmeldenummer: 00965777.6
(22) Anmeldetag: 18.08.2000
(51) Int. Cl.: G02F 1/13

(54) **ANZEIGEEINHEIT FÜR CHIPKARTEN UND VERFAHREN ZU HERSTELLUNG**
DISPLAY UNIT AND METHOD OF FABRICATION
UNITE D'AFFICHAGE ET METHODE DE FABRICATION

(30) Priorität: 18.08.1999 DE 19939106
(43) Veröffentlichungstag der Anmeldung: 17.07.2002
(73) Patentinhaber: Infineon Technologies AG, 81669 München (DE)
(72) Erfinder: HOUDEAU, Detlef, D-84085 Langquaid (DE)
(74) Vertreter: Epping Hermann & Fischer
(86) Internationale Anmeldenummer: PCT/DE2000/002812
(87) Internationale Veröffentlichungsnummer: WO 2001/013166

(56) Entgegenhaltungen:
- EP-A- 0 831 420
- DE-A- 3 105 981
- US-A- 4 104 728
- US-A- 4 862 153
- US-A- 5 436 744

## Beschreibung

Die vorliegende Erfindung betrifft eine Anzeigeneinheit, bei der an der Rückseite eines Anzeigenelements die Ansteuerungsbeziehungsweise Treiberelektronik angeordnet ist.

Flache Anzeigen auf Basis von LED- oder LCD-Technologie findet im Bereich der Datenverarbeitungsgeräte beziehungsweise der Kommunikations- und Unterhaltungselektronik zunehmend Verwendung. Hierbei setzen sich gerade LCD (liquid crystal diode)-Technologien auf Grund ihres Kontrastes, des niedrigen notwendigen Stroms und der günstigen Herstellungskosten durch. Ein übliches LCD-Display besteht dabei aus einer Deckplatte, die das eigentliche Flüssigkristallelement mit den Flüssigkristallen abdeckt, sowie einer Bodenplatte, auf die das Flüssigkristallelement mit den eigentlichen Flüssigkeitskristallen aufgesetzt ist. Durch dieses Sandwichverfahren wird ein guter Schutz der empfindlichen Flüssigkristalle erreicht. Zur elektrischen Ansteuerung der einzelnen Flüssigkristalle wird die Bodenplatte größer hergestellt als das eigentliche Flüssigkristall, um daran Kontakte zur Abführung von Signalleitungen anbringen zu können. Es ist üblich, eine sogenannte Flexschaltung, daß heißt ein Flachbandkabel mit zahlreichen einzelnen Signalleitungen, zu verwenden, um die Signale zur Bodenplatte hinführen zu können. Die eigentliche Ansteuerungs- beziehungsweise Treiberelektronik findet sich also von der Anzeigeneinheit getrennt.

Es ist auch vorgeschlagen worden, die Steuerelektronik unmittelbar auf dem überragenden Teil der Bodenplatte beziehungsweise Bodenglasfolie anzuordnen. Beide im Stand der Technik bekannten Anordnungen haben jedoch den Nachteil, daß die Bodenplatte deutlich größer sein muß als die eigentliche Anzeigenfläche, um zu ermöglichen, das Flachbandkabel beziehungsweise die Ansteuerelektronik darauf befestigen zu können.

In der US 5,436,744 ist eine Anordnung eines Anzeigeelementes, einer Bodenplatte und eines IC-Chips (display driver) in dichtem Abstand übereinander angegeben. Der IC-Chip ist auf der dem Anzeigeelement gegenüberliegenden Rückseite der Bodenplatte seitlich gegenüber dem Anzeigeelement versetzt angebracht. Die Bodenplatte ist so gekrümmt, dass der IC-Chip hinter dem rückwärtigen Teil der Anzeigeneinheit angeordnet wird.

Eine Integration von Anzeigen, wie LCD-Anzeigen, in sogenannte Chipkarten ist aufgrund der beengten seitlichen räumlichen Verhältnisse, insbesondere aber aufgrund der geringen Dicke von Chipkarten mit lediglich maximal 0,84 mm (gemäß ISO 7816, 10373) bislang überhaupt nicht möglich gewesen. Aufgrund der wachsenden Bedeutung von Chipkarten und der zunehmenden, auf ihnen untergebrachten Funktionalität wäre es jedoch vorteilhaft, auch auf Chipkarten eine Anzeigemöglichkeit vorzusehen. Dies gilt insbesondere dann, für eine wiederholte Verwendbarkeit mit einer Möglichkeit zur Wiederaufladung mit Daten oder Geldwert eingesetzt werden soll.

Bei üblichen Anzeigen ist zudem die Trennung von eigentlicher Anzeigenfläche und Steuerelektronik mit zusätzlichem Aufwand und weiteren möglichen Fehlerquellen verbunden. Es wäre daher vorteilhaft, eine Anzeigeneinheit zur Verfügung zu haben, die kompakter ist, weniger aufwendig in der Herstellung und der Montage und die evtl. in Chipkarten eingebaut werden könnte.

Diese Aufgabe wird ausgehend von der US 5,436,744 mit der Anzeigeneinheit mit den Merkmalen des Anspruches 1 bzw. mit dem Verfahren mit den Merkmalen des Anspruches 5 gelöst.

Weitere vorteilhafte Ausgestaltungen, Aspekte und Details der Erfindung ergeben sich aus den abhängigen Patentansprüchen; der Beschreibung und den beigefügten Zeichnungen.

In einem Aspekt ist die Erfindung gerichtet auf eine Anzeigeneinheit, bei der ein Steuerelement unmittelbar hinter einem Anzeigenelement positioniert ist.

In einem weiteren Aspekt ist die Erfindung gerichtet auf eine Anzeigeneinheit, deren Grundfläche im wesentlichen der Grundfläche des Flüssigkristalls entspricht.

In noch einem Aspekt ist die Erfindung gerichtet auf eine Anzeigeneinheit, bei der fehlerträchtige Steckverbindungen weitgehend minimiert werden konnten.

Demzufolge ist die Erfindung gerichtet auf eine Anzeigeneinheit gemäß Anspruch 1 und ein Verfahren gemäß Anspruch 5.

Unter einem Steuerelement ist hierbei jede elektronische Vorrichtung zu verstehen, die in der Lage ist die jeweils verwendeten Anzeigenelemente zur Anzeige von Informationsinhalten bringen zu können. Beispielsweise kann das Steuerelement einen Treiberschaltkreis oder mehrere Schaltkreise aufweisen, die eine Umwandlung der von einem informationsdarstellenden Gerät kommenden Signale in für das Anzeigenelement geeignete elektrische Ströme umwandelt.

Das Steuerelement kann hierbei direkt im Rückbereich angeordnet oder mittels eines Gehäuses gekapselt sein, was seine Standfestigkeit gegenüber äußeren Einflüssen verbessert. Unter einem Anzeigenelement im Sinne der vorliegenden Erfindung wird hierbei jegliches im wesentlichen flache Element verstanden, was zur Anzeige von Informationen geeignet ist, beispielsweise mehrgliedrige LED-Anzeigenbausteine, mehrgliedrige LCD-Anzeigenbausteine, die zur Darstellung numerischer oder alphanumerischer Informationen geeignet sind, matrixbasierte LED-, LCD- oder Plasmabildschirme, mechanisch anzeigende Elemente etc. Es kann hierbei ein oder es können mehrere der jeweils verwendeten Anzeigenelemente zum Einsatz kommen, beispielsweise mehrere LED-Bausteine, die jeweils zur Anzeige einer Ziffer beziehungsweise eines Buchstabens geeignet sind.

Das erfindungsgemäß verwendete Anzeigenelement weist eine LCD-Anzeige auf. Auch ein Anzeigenelement, das aus verschiedenartigen Einzelelementen zusammengesetzt ist, ist vorstellbar.

Die LCD-Anzeige weist eine Deckschicht, eine Flüssigkristallschicht und eine Bodenfolie auf und zumindest ein Steuerelement ist an der Bodenfolie angeordnet. Die Anordnung des Steuerelements an der Bodenfolie kann durch dem Fachmann geläufige Techniken geschehen, beispielsweise durch Ankleben, Anlöten, Fixierung durch einen gemeinsamen Rahmen etc. Die Deckschicht kann, wie bereits bei heutigen LCD-Anzeigen üblich, aus Glas bestehen. Sie kann jedoch auch aus einer Kunststofffolie bestehen, um die Dicke der LCD-Anzeige zu reduzieren und die mechanische Flexibilität zu erhöhen, wie dies beispielsweise beim Einsatz in Chipkarten notwendig ist. Zur Vermeidung der Aufnahme von Feuchtigkeit kann die Kunststofffolie zusätzlich mit zumindest einer Wasserdampf-Sperrschicht versehen sein.

Auch bei Verwendung anderer Anzeigenelemente als einer LCD-Anzeige wird es bevorzugt, daß das Steuerelement direkt an der Rückseite des zumindest einen Anzeigenelements angeordnet ist. Auch in diesem Fall kann das Anzeigenelement eine Bodenfolie oder eine Bodenplatte aufweisen, die seine Rückseite bildet, wobei das Steuerelement dann an der Bodenfolie oder an der Bodenplatte befestigt werden kann.

Das Steuerelement kann ein Gehäuse mit Sockel aufweisen, wobei der Sockel direkt mit der Bodenfolie oder Bodenplatte verbunden sein kann. Diese Anordnung dient dazu bei Treiberschaltungen, die einen höheren Strombedarf und dadurch eine größere Wärmeabgabe haben, die Kühlung zu verbessern. Durch die Verwendung von Zwischensockel ist es überdies möglich, Vorgaben bezüglich der gewünschten Tiefe einer Anzeigeneinheit exakt einzuhalten. Beim Einbau in Chipkarten würde ein Sockel die Dicke der Einheit vergrößern, so daß ein Einbau möglicherweise unmöglich würde. Gesockelte Gehäuse sind daher bei Verwendung der erfindungsgemäßen Anzeigeneinheiten in Chipkarten nicht bevorzugt.

Die Verwendung von Gehäusen und Sockeln verbietet sich beim Einsatz der erfindungsgemäßen Anzeigen in Chipkarten, da diese zu dünn sind, um Steuerelemente mit Gehäusen aufnehmen zu können. Daher wird es alternativ bevorzugt, daß das Steuerelement ein integrierter Schaltkreis ohne Gehäuse ist, der direkt mit der Bodenfolie oder Bodenplatte verbunden ist. Die Montage des integrierten Schaltkreises erfolgt üblicherweise durch Leitkleben. Vor der Montage des integrierten Schaltkreises auf die Bodenfolie oder Bodenplatte wird der das Steuerelement bildende integrierte Schaltkreis an seiner Unterseite rückgedünnt, um in eine Chipkarte hineinzupassen, vorzugsweise bis zu einer Dicke im Bereich von 0,1 mm bis 0,2 mm.

Durch die verschiedenen Maßnahmen einer Deckfolie aus Kunststoff, einer dünnen Bodenfolie und eines rückgedünnten integrierten Schaltkreises lässt sich eine Dicke der Anzeigeneinheit von 0,55 mm im Bereich des integrierten Schaltkreises und 0,45 mm in anderen Bereichen einer entsprechend ausgelegten LCD-Anzeige erreichen.

In einer erfindungsgemäßen Ausführungsform der vorliegenden Erfindung kann die Bodenfolie in einer Dimension größer als der Frontbereich ausgeführt sein, derjenige Bereich der Bodenfolie, der größer als der Frontbereich ist, auf sich selbst zurückgefaltet sein, und der integrierte Schaltkreis ohne Gehäuse mit dem zurückgefalteten Bereich der Bodenfolie verbunden sein. Nach einer Seite ist die Bodenfolie somit größer als sie notwendigerweise sein müsste, um das Anzeigenelement aufzunehmen. Die Bodenfolie ist also so ausgelegt, daß sie sowohl die Anzeigenelemente als auch den integrierten Schaltkreis aufnehmen kann und flexibel genug ist, zurückgefaltet zu werden. Die Rückfaltung kann direkt auf die Bodenfolie selbst geschehen, so daß sich die Rückseite der Bodenfolie berührt, sie kann aber auch um eine weitere Trägerschicht herum erfolgen, wobei die Bodenfolie dann um die Kante der Trägerschicht herumgeführt werden muß.

Durch diese Anordnung lässt sich ein besonders dünner Aufbau in einfacher Weise herstellen. da beispielsweise Leiterbahnen nur auf einer Seite der Bodenfolie vorgesehen sein müssen, um gleichzeitig die Anzeigenelement(e) und den integrierten Schaltkreis elektrisch kontaktieren zu können. Ein weiterer Vorteil dieser Anordnung liegt darin, daß eine Seite der Bodenfolie speziell für die Anbringung der Bauelemente ausgelegt sein kann, während die andere Seite beispielsweise adhäsive Eigenschaften aufweist.

Das Anzeigenelement und das zumindest eine Steuerelement können auf den gegenüberliegenden Oberflächen einer im wesentlichen planen Trägerstruktur angeordnet sein. Eine solche Trägerstruktur fällt nicht unter den Schutzbereich des Anspruchs 1 und bietet sich insbesondere dann an, wenn mehrere zunächst nicht miteinander verbundene Anzeigenelemente Verwendung finden sollen beziehungsweise die Rückseite des verwendeten Anzeigenelements von seiner Oberflächenstruktur her wenig geeignet ist, eine Verbindung mit dem zumindest einen Steuerelement zu erlauben. Die Trägerstruktur stellt also eine gemeinsame Basis dar, an der sowohl das Anzeigenelement als auch das Steuerelement optimal angeordnet werden können. In den meisten Fällen wird eine solche Trägerstruktur günstigerweise eine Platine, vorzugsweise eine flexible Platine sein, die gleichzeitig der elektrischen Signalführung dienen kann.

Die elektrische Verbindung von dem zumindest einen Anzeigenelement und dem zumindest einen Steuerelement vermittelst der elektrischen Leitungen kann in verschiedenster Weise erfolgen. So können die elektrischen Leitungen unmittelbar durch die Trägerstruktur hindurchgeführt werden.

Alternativ oder gleichzeitig können die elektrischen Leitungen auch um die Kante der Trägerstruktur der Bodenplatte beziehungsweise Bodenfolie herumgeführt werden.

Erfindungsgemäß ist die Bodenfolie in einer Dimension größer als der Frontbereich ausgeführt sein, derjenige Bereich der Bodenfolie, der größer als der Frontbereich ist, auf sich selbst zurückgefaltet sein, und die elektrischen Leitungen können den Frontbereich der Bodenfolie mit dem zurückgefalteten Bereich der Bodenfolie verbinden. Diese Anordnung wird mit der oben beschriebenen kombiniert, bei der ein integrierter Schaltkreis unmittelbar auf den rückgefalteten Bereich der Bodenfolie aufgebracht wird.

Sofern eine dafür geeignete Oberfläche, beispielsweise eine rückgefaltete Bodenfolie, zur Verfügung steht, können die elektrischen Leitungen als Leiterbahnen ausgeführt sein. Dies bietet sich insbesondere bei der Verwendung einer rückgefalteten Bodenfolie an.

Die elektrischen Leitungen können ebenfalls als ein flexibles Flachband ausgeführt sein beziehungsweise als Folienleitungen, beispielsweise in Form einer Inlay-Folienlage.

Die verschiedenen Arten von elektrischen Leitungen, die erfindungsgemäß verwendet werden können, lassen sich je nach elektrischen beziehungsweise Raumerfordernissen miteinander beliebig kombinieren, um eine optimale Streckenführung der elektrischen Leitungen erzielen zu können.

Gerade bei Verwendung von LCD-Anzeigeneinheiten ist es notwendig, die elektrischen Leitungen um die Bodenfolie beziehungsweise Bodenplatte herumzuführen, da ein Hindurchführen durch die Bodenplatte, wie bei konventionellen Platinen möglich, hier nicht möglich ist.

In manchen Anwendungen, beispielsweise wiederum bei Chipkarten, kann es zu thermischen Problemen kommen, wenn bei der Montage des integrierten Schaltkreises Wärme benötigt wird oder wenn der Wärme entwickelnde integrierte Schaltkreis unmittelbar hinter den Anzeigenelementen angeordnet ist, insbesondere bei den bauartbedingt empfindlichen LCD-Anzeigen. Daher wird es in solchen Fällen bevorzugt, den integrierten Schaltkreis in Abstand von den eigentlichen Anzeigenelement(en) anzuordnen. Dies kann dadurch erreicht werden, daß das Steuerelement in einem Bereich des Rückbereichs angeordnet ist, an dessen Frontereich kein Anzeigenelement angeordnet ist. Beispielsweise ist es möglich, an einer Seite der Anzeigeneinheit einen Überhang, z.B. in der Bodenplatte oder Bodenfolie, auszubilden, an dessen Rückseite das Steuerelement angebracht sein kann.

In einer alternativen Ausführungsform können die elektrischen Leitungen auch direkte Verbindungen zwischen Ausgängen des zumindest einen Anzeigenelements und Ausgängen des zumindest einen Steuerelements sein. Bei dieser besonders einfachen Ausführungsform der Erfindung werden die Ausgänge der verschiedenen beteiligen Elemente, daß heißt der Anzeigenelemente und der Steuerelemente, so ausgelegt, daß sie, wenn ihre beiden Unterseiten aufeinandergelegt werden, mit ihren elektrischen Ausgängen direkt opponiert sind, so daß diese vermittelst elektrischer Lötstellen unmittelbar verbunden werden können. Bei dieser Ausführungsform sind also keine weitergehenden Leiterbahnen oder andere elektrischen Leitungen notwendig.

Die erfindungsgemäß Anzeigeneinheit kann weiterhin einen Signalleitungsbus zur Verbindung des zumindest einen Steuerelement mit einem Gerät, das Informationen auf der Anzeigeneinheit anzeigen kann oder anzeigt, aufweisen. Ein solcher Signalleitungsbus wird jedoch nur zur Übertragung der eigentlichen Informationssignale verwendet, nicht hingegen zur Übertragung von direkten Steuerleitungen zur Ansteuerung der Einzelsegmente eines Anzeigenelements. Somit werden erheblich weniger Leitungen benötigt als im Stand der Technik.

Die Erfindung ist schließlich auch auf die Verwendung einer erfindungsgemäßen Anzeigeneinheit zum Einbau in Kompaktgeräten, bei denen die lateralen Abmessungen in Richtung der Ebene der Anzeige im wesentlichen der Größe der Anzeigeneinheit entsprechen sollen, gerichtet.

Die Verwendung kann dadurch gekennzeichnet sein, daß der Einbau in Chipkarten erfolgt. Für den Einbau bietet sich eine Kaltklebetechnik mit Cyanacrylat an, die bei mehreren Topographiestufen günstiger ist, sie die Kartenrückwand nicht unter thermomechanische Verspannungen setzt und auch bei der Anzeigeneinheit keine thermisch verursachten Vorschäden hervorrufen kann.

Durch die erfindungsgemäße Anordnung der einzelnen Elemente der Anzeigeneinheit wird man in die Lage versetzt, Geräte zu konzipieren, die eine deutlich kompaktere Aufsicht haben, als dies bei Geräten im Stand der Technik möglich war.

Im folgenden soll die Erfindung anhand von bevorzugten Ausführungsbeispielen weiter erläutert werden, wobei auf die beigefügten Zeichnungen Bezug genommen wird, in denen folgendes dargestellt ist:
Figur 1 zeigt Anzeigeneinheit mit einer LCD-Anzeige, beispielsweise einer Matrixanzeige;
Figur 2 zeigt eine weitere Anzeigeneinheit, bei der auf einer Trägerplatine mehrere Anzeigenelemente, beispielsweise für Ziffern und spezielle Symbole ("Euro"-Symbol), angeordnet sind;
Figur 3 zeit eine Ausführungsform einer zur Rückfaltung vorgesehenen Bodenfolie;
Figur 4 zeigt eine Ausführungsform der Anzeigeneinheit der vorliegenden Erfindung, welche die in Figur 3 gezeigte Bodenfolie verwendet; und
Figur 5 zeigt noch eine Anzeigeneinheit.

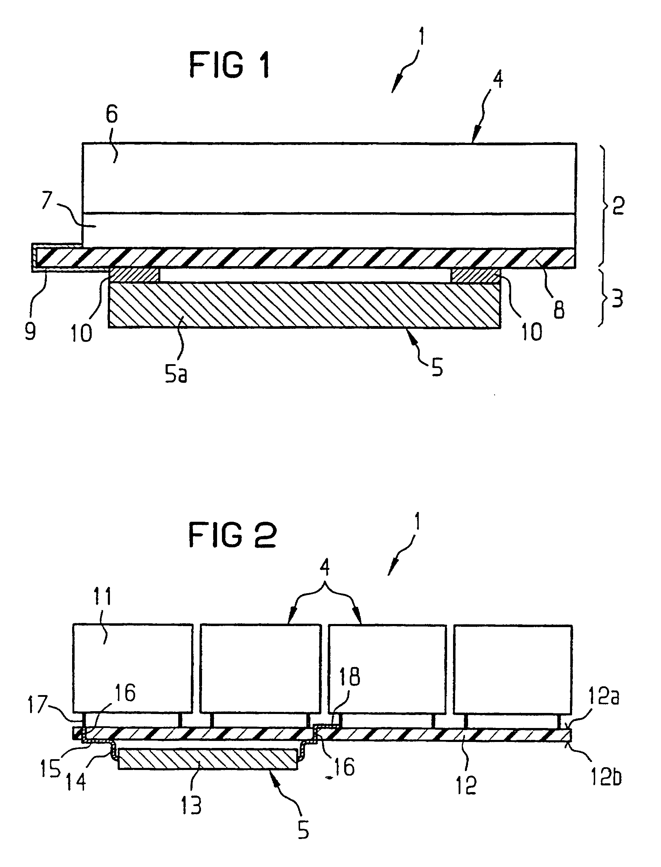

Figur 1 zeigt eine Anzeigeneinheit im Querschnitt. Eine Anzeigeneinheit 1 kann dabei gegliedert werden in einen Frontbereich 2 und einen Rückbereich 3. Das eigentliche Anzeigenelement 4 kann hier eine handelsübliche LCD-Anzeige sein, die aus einer Deckfolie 6, einer Flüssigkristallschicht 7 und einer Bodenfolie 8 besteht. An der Rückseite des Anzeigenelements 4 ist das Steuerelement 5 angebracht. Im vorliegenden Fall weist das Steuerelement 5 ein Gehäuse 5a auf, das eine darin enthaltene Ansteuerungselektronik vor externen Einflüssen oder mechanischen Beschädigungen schützt.

An einer Seite des Gehäuses 5a führt eine Umverdrahtung 9 aus dem Gehäuse heraus, die um die Kante der Bodenfolie 8 herumgeführt wird und mit ihren Signalleitungen die Flüssigkristallzellen der Flüssigkristallschicht 7 aktivieren kann. Die Umverdrahtung kann hier durch Herstellung von Leiterbahnen, die um die Kante herumführen, geschehen, jedoch auch durch Folienkabel beziehungsweise Flachbandkabel oder durch eine auf sich selbst rückgefaltete Bodenfolie mti Leiterbahnen.. Im gezeigten Ausführungsbeispiel der Figur ist das Gehäuse 5a mit Hilfe von Abstandssockel 10 von der Bodenfolie 8 beabstandet. Es ist jedoch auch vorstellbar, das Gehäuse 5a unmittelbar auf die Bodenfolie 8 aufzukleben oder in sonstiger Weise zu befestigen. Schließlich ist es auch möglich, auf das Gehäuse 5a zu verzichten und die nackte Steuerelektronik des Steuerelements 5 unmittelbar auf die Bodenfolie 8 aufzukleben oder in sonstiger Weise zu befestigen. Die vorspringende Kante der Bodenfolie 8, um welche die Umverdrahtung 9 herumgeführt ist, ist schematisch aufzufassen, da auch geringere Überhänge der Bodenfolie 8 bei bestimmten Ausführungsformen der Erfindung möglich sind und andererseits bei seitlicher Verschiebung des integrierten Scahltkreises aus tehrmischen Gründen der Überhang ggfs. größer ausfallen müsste. Bei Verwendung erhältlicher LCD-Anzeigen muß davon ausgegangen werden, daß ein solcher Überhang der Bodenfolie vorhanden ist, da dort üblicherweise die Flexschaltung angebracht wird.

Figur 2 zeigt eine weitere Anzeigeneinheit im Querschnitt. Hier sind die einzelnen verwendeten Elemente auf den beiden Oberflächen 12a, 12b einer Platine 12, die als Trägerstruktur fungiert, angeordnet. Auf der Vorderseite 12a der Platine 12 sind vier Anzeigenelemente 4, in diesem Fall LED- oder LCD-Anzeigenbausteine 11, dargestellt, die mittels ihrer Anzeigenbausteinbeine 17 an der Platine 12 befestigt sind. Die Befestigung der Elemente 4, beziehungsweise 11, kann auch mittels Klebstoff oder in sonstiger dem Fachmann geläufiger Weise geschehen, beispielsweise, um die elektrische Verbindung über die Anzeigenbausteinbeine 17 von mechanischem Druck zu befreien.

Die Platine 12, beziehungsweise jegliche Trägerstruktur kann entfallen, wenn die einzelnen Anzeigenelemente 4 miteinander unmittelbar so verbunden sind, daß sie eine Einheit bilden.

Auf der Rückseite 12b der Platine 12 ist ein Steuerelement 5 in Form eines Treiberschaltkreises 13 angebracht, von dem IC-Beine 14 wegführen, die seiner elektrischen Verbindung mit der Umwelt dienen.

Im linken Bereich der Figur 2 ist gezeigt, wie mittels eines IC-Beins 14 eine Leiterbahn 15 und einer Leiterdurchführung 16 durch die Platine 12 eine elektrische Signalverbindung zwischen dem Treiberschaltkreis 13 und dem Anzeigenbausteinbein 17 eines LED- beziehungsweise LCD-Anzeigenbausteins 11 erfolgen kann.

Im mittleren Bereich der Figur 2 ist dargestellt, wie ausgehend wiederum von einem IC-Bein 14 unmittelbar eine Leiterdurchführung 16 durch die Platine 12 vorgenommen werden kann, wobei dann auf der Vorderseite 12a der Platine 12 eine Leiterbahn 18 zum Anzeigenbausteinbein 17 führt, um die elektrische Verbindung zwischen dem Treiberschaltkreis 13 und dem Anzeigenbaustein 11 zu erreichen.

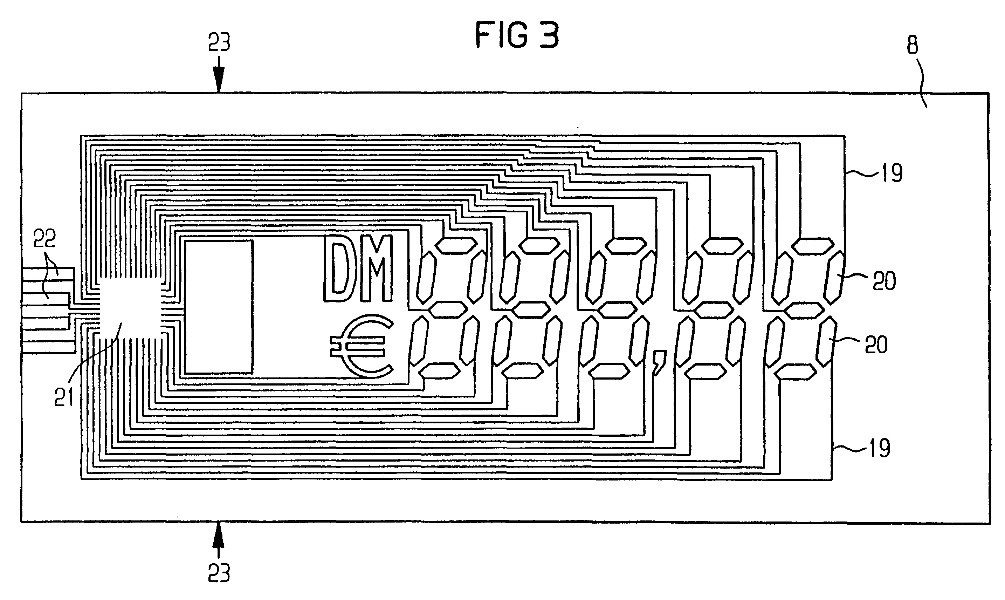

Figur 3 zeigt eine Bodenfolie 8 gemäß einer besonders bevorzugten Ausführungsform der vorliegenden Erfindung, die zur Verwendung in einem LCD-Anzeigenelement vorgesehen ist. Auf die Bodenfolie sind zahlreiche Leiterbahnen 19 aufgetragen, die der Stromzufuhr zu Flüssigkristallelektroden 20 dienen. Diese sind üblicherweise aus einem Material wie Indiumoxid oder Zinkoxid, um transparent zu sein und damit nicht bei Betrachtung der Anzeigeneinheit sichtbar zu sein. Die Leiterbahnen 19 werden in einem Schaltkreiskontaktbereich 21 zusammengeführt, in den der Treiberbaustein bzw. das Steuerelement 5 eingeklebt werden kann. Vom Schaltkreiskontaktbereich 21 führen mehrere Leiterbahnen 22 weg, die der externen Verbindung des Steuerelements 5 mit einem Gerät dienen. Bei der Assemblierung des LCD-Anzeigenelements wird die Bodenfolie längs der Verbindungslinie 22-22 umgefaltet und auf sich selbst rückgefaltet, so daß das Steuerelement 5 auf die Rückseite zu liegen kommt. Durch das Falten an der Faltlinie 23 kommt das Steuerelenent 5 in einem Bereich der Bodenfolie 8 zu liegen, in dem sich keine Flüssigkristalle befinden.

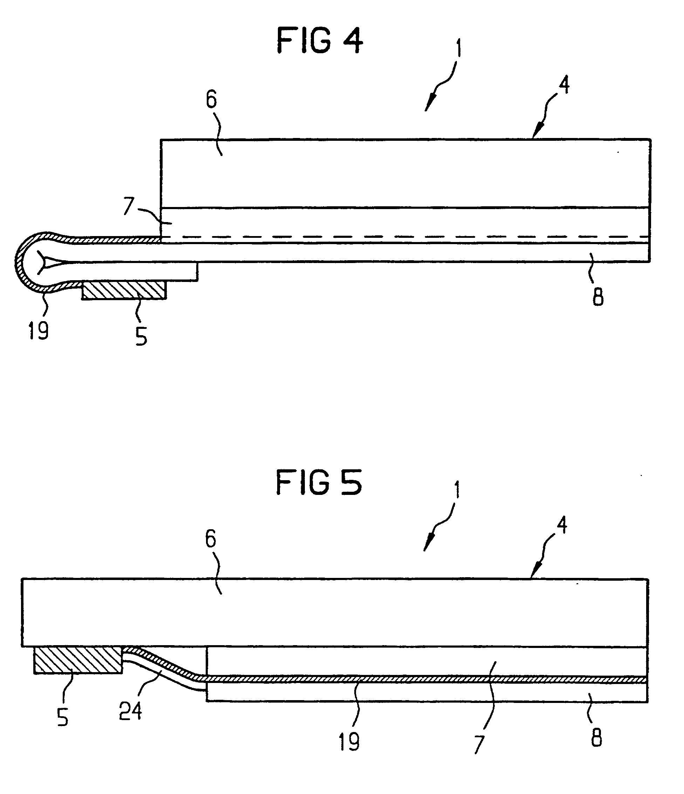

Fig. 4 zeigt einen Querschnitt durch eine erfindungsgemäße Anzeigeneinheit 1, die mit der Bodenfolie gemäß der Figur 3 ausgeführt worden ist. Das Steuerelement 5, z.B. ein rückgedünnter integrierter Schaltkreis, ist seitlich des eigentlichen Anzeigenelements 4 angeordnet. Die Rückfaltung der Bodenfolie 8 führt dazu, daß die Leiterbahnen 19 um die neugebildete Kante der Bodenfolie 8 herumgeführt werden.

Figur 5 zeigt eine weitere Anzeigeneinheit im Querschnitt, wobei eine LCD-Anzeige verwendet wird. Bei dieser ist die Deckfolie 6 größer ausgeführt als die Flüssigkristallschicht 7. Das Steuerelement 5 wird nicht an der Bodenfolie 8 angebracht, sondern unmittelbar an einem rückwärtigen Bereich der Deckfolie 6, der nicht in Kontakt mit der Flüssigkristallschicht 7 steht. Die elektrische Verbindung zwischen der Leiterbahnen 19 tragenden Bodenfolie 8 und dem Steuerelement 5 erfolgt beispielsweise durch eine weitere, mit Leiterbahnen beschichtete Folie 24 oder in sonstiger, geeigneter Weise. Diese Ausführung weist eine besonders geringe Dicke auf und ist daher zur Verwendung in Chipkarten besonders geeignet.

Die vorliegende Erfindung ermöglicht die Realisierung von Anzeigenelementen in deutlich kompakteren Abmessungen als bisher möglich; mit kürzeren und damit störfreieren elektrischen Leitungen und mit einer vereinfachten Signalinformationsübertragung zwischen Anzeigeneinheit und ansteuerndem Gerät. Der Aufbau der Einheit bleibt insgesamt im konventionellen Bereich, so daß eine Verwendung in existierenden Geräten jederzeit möglich sein sollte. Durch die Umverdrahtung über die Folienkanten ist keine zusätzliche Verdrahtungsfläche mehr notwendig. Das Steuerelement sitzt auf der für die Abführung elektrischer Signale in ein Gerät hinein günstigeren Seite. Zudem ist das Steuerelement durch die Anzeigenelemente mechanisch vor Eingriffen und Beschädigungen geschützt. Schließlich bleibt das Steuerelement in der gesamten Anzeigeneinheit integriert, so daß diese als ein funktioneller Block vermarktet werden kann, der optimal aufeinander abgestimmte Anzeigenelemente und Steuerelemente enthält.

Der erfindungsgemäße Aufbau ermöglicht erstmalig die Realisierung von LCD-Anzeigen einer Dicke, die in Chipkarten Platz findet.

## Patentansprüche

1. Anzeigeneinheit für Chipkarten mit
einem Anzeigenelement (4) mit einer als Anzeige für eine Frontseite der Anzeigeneinheit vorgesehenen Flüssigkristallschicht (7),
einer Bodenfolie (8) und
einem damit elektrisch leitend verbundenen Steuerelement (5), das als integrierter Schaltkreis auf einer der Frontseite gegenüberliegenden Rückseite der Anzeigeneinheit angeordnet ist,
**dadurch gekennzeichnet, dass**
das Anzeigenelement (4) und das Steuerelement (5) direkt auf derselben Oberseite der Bodenfolie (8) befestigt sind und
die Bodenfolie (8) zwischen dem Anzeigenelement (4) und dem Steuerelement (5) so zurückgefaltet ist, dass das Steuerelement seitlich des Anzeigenelementes auf einer der Flüssigkristallschicht gegenüberliegenden Seite des Anzeigenelementes angeordnet ist.

2. Anzeigeneinheit nach Anspruch 1, bei der
elektrische Leitungen (19) um eine Kante der Bodenfolie (8) herumgeführt sind.

3. Anzeigeneinheit nach Anspruch 1 oder 2, bei der
das Steuerelement (5) ein integrierter Schaltkreis ohne Gehäuse ist.

4. Anzeigeneinheit nach einem der Ansprüche 1 bis 3 mit
einem Signalleitungsbus zur Verbindung des Steuerelements (5) mit einem Gerät zur Anzeige von Informationen auf dem Anzeigenelement (4).

5. Verfahren zur Herstellung eines LCD-Anzeigenelementes für Chipkarten, bei dem
in einem ersten Schritt ein Anzeigenelement (4), das eine Flüssigkristallschicht (7) umfasst, und ein Steuerelement (5) auf einer Seite einer mit Leiterbahnen (19) versehenen Bodenfolie (8) angebracht werden und
in einem zweiten Schritt die Bodenfolie zwischen dem Anzeigenelement und dem Steuerelement gefaltet wird, so dass das Steuerelement auf die Rückseite der Anzeigeneinheit in einem Bereich der Bodenfolie zu liegen kommt, in dem sich keine Flüssigkristalle befinden, und die Leiterbahnen um die neugebildete Kante der Bodenfolie herumgeführt werden.

## Claims

1. Display unit for chip cards with
a display element (4) with a liquid crystal layer (7) intended as the display for a front side of the display unit,
a bottom sheet (8) and
a control element (5), which is connected thereto in an electrically conducting manner and is arranged as an integrated circuit on a rear side of the display unit opposite from the front side,
**characterized in that**
the display element (4) and the control element (5) are fastened directly on the same upper side of the bottom sheet (8) and
the bottom sheet (8) is folded back between the display element (4) and the control element (5) in such a way that the control element is arranged laterally with respect to the display element on a side of the display element opposite from the liquid crystal layer.

2. Display unit according to Claim 1, in which electrical lines (19) are led around an edge of the bottom sheet (8).

3. Display unit according to Claim 1 or 2, in which the control element (5) is an integrated circuit without a package.

4. Display unit according to one of Claims 1 to 3, with a signal line bus for the connection of the control element (5) to a device for the display of information on the display element (4).

5. Method for producing an LCD display element for chip cards, in which
in a first step, a display element (4), which comprises a liquid crystal layer (7), and a control element (5) are attached on one side of a bottom sheet (8) provided with conductor tracks (19) and
in a second step, the bottom sheet is folded between the display element and the control element, so that the control element comes to lie on the rear side of the display unit in a region of the bottom sheet in which there are no liquid crystals, and the conductor tracks are led around the newly formed edge of the bottom sheet.

## Revendications

1. Unité d'affichage pour des cartes à puce, comprenant
un élément (4) d'affichage ayant une couche (7) de cristaux liquides prévue comme affichage pour un côté avant de l'unité d'affichage,
une feuille (8) de fond et
un élément (5) de commande qui y est relié d'une manière conductrice de l'électricité et qui est disposé sous la forme d'un circuit intégré sur un côté arrière du dispositif d'affichage opposé au côté avant,
**caractérisée en ce que** l'élément (4) d'affichage et l'élément (5) de commande sont fixés directement sur le même côté supérieur de la feuille (8) de fond et la feuille (8) de fond est repliée entre l'élément (4) d'affichage et l'élément (5) de commande, de façon à ce que l'élément de commande soit disposé latéralement à l'élément d'affichage sur un côté de l'élément d'affichage, qui est opposé à la couche de cristaux liquides.

2. Unité d'affichage suivant la revendication 1, dans laquelle des lignes (19) électriques passent autour d'un bord de la feuille (8) de fond.

3. Unité d'affichage suivant la revendication 1 ou 2, dans laquelle l'élément (5) de commande est un circuit intégré sans boîtier.

4. Unité d'affichage suivant l'une des revendications 1 à 3, comprenant un bus de ligne de signal pour la liaison de l'élément (5) de commande à un appareil d'affichage d'informations sur l'élément (4) d'affichage.

5. Procédé de fabrication d'un élément d'affichage LCD pour des cartes à puce, dans lequel
on met dans un premier stade un élément (4) d'affichage, qui comprend une couche (7) de cristaux liquides, et un élément (5) de commande sur un côté d'une feuille (8) de fond munie de pistes (19) conductrices et
dans un deuxième stade, on plie la feuille de fond entre l'élément d'affichage et l'élément de commande, de façon à ce que l'élément de commande vienne sur le côté arrière de l'unité d'affichage dans une partie de la feuille de fond dans laquelle il n'y a pas de cristaux liquides et de manière à ce que les pistes conductrices passent autour du bord nouvellement formé de la feuille de fond.
